# EUROPEAN PATENT SPECIFICATION

(11) **EP 0 603 955 B1**
(45) Date of publication and mention of the grant of the patent: **27.08.1997**
(21) Application number: 93203556.1
(22) Date of filing: 17.12.1993
(51) Int. Cl.: C08F 8/04, C08C 19/02, C08F 8/32

(54) **Viscosity-index improvers**
Viskositätsindexverbesserer
Agent améliorant l'indice de viscosité

(30) Priority: 21.12.1992 US 993740
(43) Date of publication of application: 29.06.1994
(73) Proprietor: SHELL INTERNATIONALE RESEARCH MAATSCHAPPIJ B.V., 2596 HR Den Haag (NL)
(72) Inventor: Sutherland, Robert Jude, Houston, Texas 77095 (US); Dubois, Donn Anthony, Houston, Texas 77079 (US)

(56) References cited:
- EP-A- 0 029 622
- EP-A- 0 422 728
- EP-A- 0 438 240
- EP-A- 0 459 588
- WO-A-86/00626
- GB-A- 2 144 430

## Description

This invention relates to star polymers, a process for their preparation, lubricating oil compositions containing them, and their use as viscosity-index improver additives.

Star polymers useful as viscosity index improvers for oils and lubricants are described in EP-A-459 588. The star polymers have blocks of a methacrylate at the end of polymeric arms that are grown from a coupled core of a smaller star polymer. The smaller star polymers are prepared by cross-linking small blocks of styrene, isoprene, or butadiene with divinylbenzene. The larger polymeric arms are grown at active lithium sites on the central core of the small star polymers.

Although not described in EP-A-459 588, in practice it is found that the methacrylate blocks at the end of the polymeric arms have a strong tendency to couple two or more of the star polymer cores. Coupling of the star polymer cores effectively broadens the molecular weight distribution of the star polymers and reduces performance as viscosity-index improvers for lubricating oils. Elimination of the coupling would improve performance in lubricating oils.

The problem of coupling of star polymer cores is minimised using the present invention.

Thus, the present invention provides a polymer comprising:
at least 3 first arms, each arm comprising a hydrogenated, polymerised conjugated diene and having a peak molecular weight from 10,000 to 200,000;
at least 3 second arms, each arm comprising a polymerised methacrylate and/or amide or imide derivative thereof and having a peak molecular weight from 500 to 10,000; and
a central core comprising a polymerised bisunsaturated monomer, wherein the central core connects the first and second arms in a star configuration.

The present invention further provides a process for the preparation of a polymer according to the invention which comprises the steps of:
(i) anionically polymerising conjugated diene monomers and, optionally, vinylarene monomers to form first arms, each arm having a peak molecular weight from 10,000 to 200,000;
(ii) coupling the first arms with a bisunsaturated compound to form central cores;
(iii) anionically polymerising methacrylate monomers to grow second arms from the central cores thereby to form a base polymer, each second arm having a peak molecular weight from 500 to 10,000;
(iv) hydrogenating the base polymer such that at least 90% of aliphatic unsaturation is hydrogenated; and, if desired,
(v) converting at least a proportion of the polymerised methacrylate monomers to amide or imide groups.

The conjugated diene preferably contains up to 8 carbon atoms. Illustrative of such conjugated dienes are 1,3-butadiene (butadiene), 2-methyl-1,3-butadiene (isoprene), 1,3-pentadiene (piperylene), 1,3-octadiene, and 2-methyl-1,3-pentadiene. Preferred conjugated dienes are butadiene and isoprene, particularly isoprene.

The conjugated diene, preferably isoprene or butadiene, is anionically polymerised with an initiator, preferably an alkyl lithium. Alkyl lithium initiators having a secondary alkyl group are preferred. Most preferred is sec-butyllithium.

The bisunsaturated monomer couples the conjugated diene arms into a "star" molecule having a plurality of the first polymeric arms radiating from a central core which comprises the polymerised bisunsaturated compound. After coupling, the core of the molecules contain residual lithium sites which initiate the growth of the second polymeric arms.

One or more of the first polymeric arms may comprise a polymerised vinylarene in a random, tapered, or block configuration with the polymerised conjugated diene. The preferred vinylarene is styrene and the preferred vinylarene (styrene) content for the star polymers is less than 10%w.

The polymerisation to produce the first polymeric arms is conducted by the conventional method of contacting the monomer and polymerisation initiator in a suitable reaction solvent under moderate reaction conditions. Hydrocarbon reaction solvents, particularly cycloaliphatic hydrocarbon solvents such as cyclohexane are suitable as reaction solvents. It is useful on some occasions to employ a reaction solvent of greater polarity and in such instances a mixed solvent, often a mixture of cyclohexane and a polar co-solvent, e.g., an ether co-solvent such as diethyl ether or tetrahydrofuran, is used. The use of cyclohexane or cyclohexane-diethyl ether as reaction solvent is preferred. The polymerisation temperature is moderate, for example from 10°C to 80°C and it is often useful to conduct this polymerisation at ambient temperature (20°C). The reaction pressure is a pressure sufficient to maintain the reaction mixture in a liquid phase. Typical reaction pressures are from about 0.8 atmospheres (81.1 kPa) to about 5 atmospheres (506.6 kPa).

Control of the molecular weight of the first polymeric arms is achieved by conventional methods such as controlling the ratio of initiator to monomer. The polymeric arms are conventionally termed a living polymer because of the presence therein of an organometallic site. The first polymeric arms each have a peak molecular weight from 10,000 to 200,000, preferably from 10,000 to 100,000, more preferably from 20,000 to 100,000.

The first polymeric arms serve as the polymerisation initiator for the bisunsaturated monomer which cross-links to form the central core of the star polymer molecules. A variety of bisunsaturated monomers are useful in the production of the core of the star block polymers of the invention. Preferred bisunsaturated monomers are di(alkenyl) aromatic compounds having up to 20 carbon atoms and up to 2 aromatic rings, including divinylbenzene, divinyltoluene, divinylbiphenyl, divinylnaphthalene, diisopropenylbenzene, diisopropenylbiphenyl and diisobutenylbenzene. Most preferred is divinylbenzene.

The cross-linking of the bisunsaturated monomer with the first polymeric arms is preferably conducted by adding the bisunsaturated monomer to the reaction mixture containing the first polymeric arms. The use of the same or similar reaction conditions and reaction solvent are suitable for the cross-linking reaction to form the core of the star block polymer.

The core of cross-linked bisunsaturated monomer has a plurality of organometallic sites which serve as the polymerisation initiator for the methacrylate which forms the relatively smaller second polymeric arms. Alkyl methacrylates are preferred, e.g. those having the structure 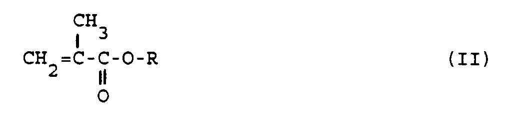 where R is a C₁-C₃₀ alkyl group. The alkyl group on the alkyl methacrylate monomer has up to 30 carbon atoms, preferably up to 20 carbons. The alkyl methacrylate is polymerised through the ethylenic unsaturation of the methacrylate group. The alkyl methacrylate monomers which are polymerised according to this invention include methyl methacrylate, ethyl methacrylate, sec-butyl methacrylate, t-butyl methacrylate, sec-amyl methacrylate, octyl methacrylate, decyl methacrylate, dodecyl methacrylate and octadecyl methacrylate. Polymerisation is preferably conducted in the reaction mixture containing the star molecules having organometallic sites on the central core.

The choice of alkyl methacrylate will in part depend upon the particular nature of the star block polymer desired. However, the production of polymerised alkyl methacrylate branches wherein the alkyl is primary and of few carbon atoms is relatively difficult because of the rather low reaction temperatures that are required to produce the polymerised alkyl methacrylate branches. Alternatively, the production of polymerised alkyl methacrylate branches wherein the alkyl moiety is a higher alkyl moiety is also difficult because of the relatively inactive character of such alkyl methacrylates and the difficulty of readily obtaining the desired alkyl methacrylate monomer. The preferred alkyl methacrylates for forming the star block polymer of methacrylate-containing branches is a branched-butyl methacrylate, i.e., sec-butyl methacrylate or t-butyl methacrylate. The star block polymers resulting from use of these methacrylates are preferred products because of the desirable properties thereof and because of the relative ease of production. Star block polymers incorporating other alkyl methacrylate moieties are produced directly from the corresponding alkyl methacrylate but it is often desirable to produce such polymers by initially employing a branched-butyl methacrylate to produce a star block polymer having branched-butyl methacrylate branches and subsequently trans-esterifying the initial star block polymer product to incorporate the desired alkyl moieties.

In the production of a branched-butyl methacrylate-containing polymer suitable reaction conditions typically include a reaction temperature from -80°C to 80°C with the lower portion of that range being preferred for polymerisation of sec-butyl methacrylate and the higher portion of the range being preferred for t-butyl methacrylate. The polymerisation pressure is suitably sufficient to maintain the reaction mixture in a liquid phase, typically up to 5 atmospheres (506.6 kPa).

The second polymeric arms each have a peak molecular weight from 500 to 10,000, more preferably from 1,000 to 10,000.

The star polymers are hydrogenated to reduce the extent of unsaturation in the aliphatic portion (aliphatic unsaturation) of the polymer. A number of catalysts, particularly transition metal catalysts, are capable of hydrogenating the aliphatic unsaturation of the star polymers. It is preferred to employ a "homogeneous" catalyst formed from a soluble nickel compound and a trialkylaluminium. Nickel naphthenate or nickel octoate is a preferred nickel salt. Although this catalyst system is one of the catalysts conventionally employed for selective hydrogenation in the presence of aromatic groups, other "conventional" catalysts are not suitable for hydrogenation of the conjugated dienes in the ester containing polymers.

In the hydrogenation process, the base polymer is reacted in situ, or if isolated is dissolved in a suitable solvent such as cyclohexane or a cyclohexane-ether mixture and the resulting solution is contacted with hydrogen gas in the presence of the homogeneous nickel catalyst. Hydrogenation takes place at temperatures from 25°C to 150°C and hydrogen pressures from 15 psig (103.4 kPa) to 1000 psig (6894.8 kPa). Hydrogenation is considered to be complete when at least 90%, preferably at least 98%, of the carbon-carbon unsaturation of the aliphatic portion (aliphatic unsaturation) of the base polymer has been saturated, as can be determined by nuclear magnetic resonance spectroscopy.

The hydrogenated star polymer is then recovered by conventional procedures such as washing with aqueous acid to remove catalyst residues, solvent removal, or addition of a non-solvent to coagulate the polymer. A typical non-solvent for this purpose is aqueous methanol.

Preferred polymers of the invention are those comprising:
an average of at least 10 first arms, each arm consisting of hydrogenated isoprene, or styrene and hydrogenated isoprene and having a peak molecular weight from 10,000 to 100,000;
an average of at least 10 second arms, each arm consisting of polymerised t-butyl methacrylate monomers and having a peak molecular weight from 1,000 to 10,000, wherein at least 80% of the polymerised t-butylmethacrylate monomers have been converted to amide or imide groups; and
a central core comprising polymerised divinylbenzene, wherein the central core connects the first and second arms in a star configuration.

The most preferred polymers of the invention comprise an average per molecule of 10-50 first arms consisting of hydrogenated, polymerised isoprene or blocks of styrene and hydrogenated, polymerised isoprene, the first arms each having a peak molecular weight from 10,000 to 100,000, at least 10-50 second arms consisting of polymerised t-butyl methacrylate monomers, the second arms each having a peak molecular weight from 1,000 to 10,000, wherein at least 80% of the polymerised t-butyl methacrylate monomers have been converted to amide or imide groups, and one central core per molecule, the core comprising polymerised divinylbenzene, wherein the central core connects the first and second polymer arms in a star configuration.

The molecular weight of the star polymers of the invention will vary with the choice of reaction conditions, reaction solvent and the relative proportions of monomeric reactants as well as determined in part by whether the functionalised branches are homopolymeric or contain an internal portion of polymerised anionically polymerisable monomer. The star polymers of particular interest have a peak molecular weight from 33,000 to 5.5 x 10⁶ and most preferably from 100,000 to 3 x 10⁶. The precise peak molecular weight will vary from molecule to molecule and the above values are average values. It is, however, characteristic of the star polymers of the invention that the polymer has a rather narrow molecular weight distribution.

The star polymers of the invention may be represented by the formula

(A-)ₜ-C-[-M]ₛ (I)

wherein C comprises the cross-linked bisunsaturated monomer, A comprises the hydrogenated, polymerised conjugated diene, M comprises the polymerised alkyl methacrylate and/or amide or imide derivative thereof, wherein each alkyl independently has up to 30 carbon atoms, polymerised through the ethylenic unsaturation of the methacrylate moiety, s is the number of polymeric arms grown from the block of cross-linked bisunsaturated monomer and is greater than or equal to 3, and t is the number of conjugated diene arms which is equal to or greater than s.

While the proportions of the moieties represented by the terms C, A, and M will vary somewhat from molecule to molecule, the percentage of the molecular weight of the molecule attributable to the central core, C, is no more than 10%w and preferably no more than 2%w.

Each A block or segment preferably comprises at least 90% by weight of the hydrogenated, polymerised conjugated diene. The conjugated dienes preferably have up to 8 carbon atoms. Illustrative of such conjugated dienes are 1,3-butadiene (butadiene), 2-methyl-1,3-butadiene (isoprene), 1,3-pentadiene (piperylene), 1,3-octadiene, and 2-methyl-1,3-pentadiene. Preferred conjugated dienes are butadiene and isoprene, particularly isoprene. Within the preferred polydiene blocks or segments, the percentage of units produced by 1,4 polymerisation is at least 5% and preferably at least 20%.

Each M is preferably a methacrylate block or segment comprising at least 90% by weight of a polymerised alkyl methacrylate and/or amide or imide derivative thereof. Homopolymeric M segments or blocks of alkyl methacrylates/derivatives are most preferred. The alkyl methacrylates have the structure: 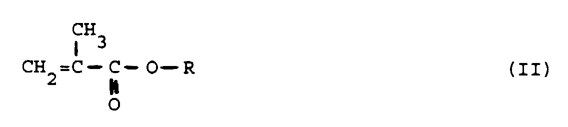 wherein R is an alkyl group comprising from 1 to 30 carbon atoms, preferably 1 to 10 carbon atoms. The most preferred alkyl methacrylates are s-butyl methacrylate and t-butyl methacrylate. The t-butyl methacrylate monomer is commercially available in high purity from Mitsubishi-Rayon, Japan.

Less pure t-butyl methacrylate is available from Monomer, Polymer and Dajac and can be used if passed through a column of alumina and 13X zeolite to remove methacrylic acid and t-butylalcohol. The preferred zeolites have a cavity size no less than 10 Angstroms such as Zeolite 13X which has the formula

Na₈₆(AlO₂)₈₆(SiO₂)₁₀₆.267H₂O.

The star polymers of this invention have the advantage of little or no coupling of two or more molecules during polymerisation of the alkyl methacrylate.

The amide or imide groups in the preferred polymers of the invention are produced by heating the base polymers to a temperature from about 180°C-400°C in the presence of a secondary, or preferably, primary amine. Heating is preferably conducted in an extruder having a devolatisation section to remove volatile by-products.

Primary amines useful for the invention include those listed in Column 3, lines 40-56, of US Patent No. 4,246,374. The most preferred primary amine is N,N-diethylaminopropylamine.

The amide/imide-containing polymers of the invention, like the base polymers, contain polar groups and have utilities conventional for such polymers. The polar polymers are particularly useful as both the dispersant and viscosity-index improver in motor oils.

Accordingly, the present invention further provides a lubricating oil composition comprising a major amount (more than 50%w based on the total composition) of a lubricating oil and a minor amount, preferably from 0.1 to 20%w, more preferably from 0.1 to 10%w, and especially from 0.2 to 5%w, based on the total composition, of a polymer according to the invention.

Suitable lubricating oils are natural, mineral or synthetic lubricating oils.

Natural lubricating oils include animal and vegetable oils, such as castor oil. Mineral oils comprise the lubricating oil fractions derived from crude oils, coal or shale, which fractions may have been subjected to certain treatments such as clay-acid, solvent or hydrogenation treatments. Synthetic lubricating oils include synthetic polymers of hydrocarbons such as polyalphaolefins; modified alkylene oxide polymers; and ester lubricants. These lubricating oils are preferably crankcase lubricating oils for spark-ignition and compression-ignition engines, but include also hydraulic lubricants, metal-working fluids and automatic transmission fluids.

Preferably the lubricating base oil component of the compositions according to the present invention is a polyalphaolefin oil, or a mineral lubricating oil or a mixture of mineral lubricating oils, such as those sold by member companies of the Royal Dutch/Shell Group under the designations "HVI", or "XHVI" (trade mark).

The viscosity of the lubricating base oils present in the compositions according to the present invention may vary within wide ranges, and is generally from 3 to 35mm²/s at 100°C.

The lubricating oil compositions of the present invention may further contain a number of other additives such as antioxidants, metal detergents such as (overbased) alkaline earth metal phenates, sulphonates and salicylates, ashless dispersants such as polyolefin-substituted succinimides, e.g. those described in GB-A-2,231,873, foam inhibitors, corrosion inhibitors, pour point depressants, friction modifiers, and extreme pressure/anti-wear additives such as zinc or sodium dithiophosphates.

The polymer of the invention can be added separately to the lubricating oil or it can be blended with other additives and added to the lubricating oil together. A preferred method of adding the polymer to the lubricating oil is first to prepare a concentrate of the polymer and then to add this concentrate in a calculated, desired amount to the lubricating oil.

The present invention still further provides the use of a polymer according to the invention as a viscosity-index improver additive.

The invention will be further understood from the following illustrative examples.

### Example 1

A first reactor was charged with 270 pounds (122.45 kg) of cyclohexane and 30 pounds (13.6 kg) of styrene monomer. To the stirred mixture 6.5 pounds (2.95 kg) of sec-butyllithium were added and the styrene was polymerised for 10 half-lives at 60°C.

In a second reactor 273 pounds (123.8 kg) of cyclohexane and 50 pounds (22.7 kg) of isoprene monomer were titrated with sec-butyllithium to remove any impurities. Then 27 pounds (12.25 kg) of the living homopolystyrene from step 1 were added to the isoprene and the isoprene was polymerised for 12 half-lives at 60°C. Next, 200 ml of 55% active divinylbenzene were added to the living styrene-isoprene polymeric arms and reacted at 80°C for 30 minutes to form the living star polymer.

The temperature of the star polymer mixture was lowered to 35°C and 1.20 pounds (0.54 kg) of tert-butyl methacrylate (tBMA) were added to the reaction. The tBMA was polymerised for 30 minutes at 35°C to form the second polymeric arms, and the reaction was quenched with 19 ml of methanol.

The star polymer of Example 1 was selectively hydrogenated using a catalyst composed of nickel octoate reduced by triethyl aluminium. The ratio of nickel to aluminium for this particular example was 1:2.3. The total catalyst charge was periodically increased to give a product with low residual unsaturation.

### Example 2

A reactor was charged with 12.3 kg of dry cyclohexane and 1.36 kg of isoprene monomer. The cyclohexane and isoprene were titrated with sec-butyllithium to remove impurities, then 26.8 ml of 1.45 M sec-butyllithium were added to polymerise the isoprene. The isoprene was allowed to react for ten half-lives at about 60°C. Then 32 ml of 55% divinylbenzene were added to form a star polymer.

A first two litre Büchi reactor was charged with 1.11 kg of the living star polymer solution. The stirred solution was reacted with 5.7 g of tert-butyl methacrylate, dissolved into 21.5 ml of cyclohexane, for 1 hour. The reaction was then quenched with 0.4 ml of methanol.

A second two litre Büchi reactor was charged with 1.035 kg of the living polymer solution. The stirred solution was reacted with 5.3 g of tert-butyl methacrylate, dissolved into 20 ml of cyclohexane, for 1 hour. The reaction was quenched with 0.3 ml of methanol.

The polymer solutions from both Büchi reactors were then combined and selectively hydrogenated with the nickel catalyst from Example 1 to reduce the unsaturation in the polyisoprene blocks.

### Example 3

The conversion of the polymerised t-butyl methacrylate in the star polymers of Examples 1 and 2 to amide groups was carried out in an extruder. For this particular example a Brabender melt mixer was used. The Brabender mixer was heated to 250°C and 60 g of polymer were added with the mixing blades at 100 rpm. When the melt was uniformly mixed, a mixture of N,N-diethylaminopropylamine (DAP) and Penrico Oil was added over 3 minutes time (the oil serves to prevent the DAP from vaporising out of the Brabender before it can mix with the polymer melt). The sample was allowed to mix for 3 minutes longer and then was removed from the Brabender mixer. Infra-red spectral analysis showed conversion to the amide, the ester peak at 1726 cm⁻¹ having been replaced by an amide peak at 1667 cm⁻¹. Infra-red spectral analysis also revealed that the conversion to amide was at least 80% based on the ratio of carbonyl absorbance to amide carbonyl absorbance.

### Comparative Example A

A 600 ml beaker, contained inside a glove box with a dry nitrogen atmosphere, was charged with 380 ml of cyclohexane and 20 ml of diethyl ether. To this were added 3 ml of 1.4 M sec-butyllithium followed by 10 ml of styrene monomer. The styrene monomer was polymerised for 20 minutes at ambient temperature. Next, 1 ml of 55% active divinylbenzene was added to the reaction and allowed to couple for 15 minutes. Finally, 50 ml of lauryl methacrylate monomer, treated with 10 microlitres of triethyl aluminium, were added to the reaction as a steady stream and allowed to react for 30 minutes. The reaction was quenched with methanol and the polymer was recovered by precipitation in methanol. Analysis of the product by gel permeation chromatography showed a broadly distributed, polymodal material.

### Example 4

The star block copolymer from Example 3 having no styrene (i.e. that derived from the star polymer of Example 2) and, for comparison, a star polymer prepared as in Example 2, but containing no tert-butyl methacrylate, were blended with a motor oil to give SAE 5W-30 and SAE 10W-40 formulations.

The polymers were first blended in Exxon 100 NLP base oil at 5%w concentration using a Silverson mixer at 120 to 130°C until the polymer was completely dissolved. A small amount of antioxidant was added to the concentrates to prevent thermal oxidation.

Fully formulated SAE 5W-30 and SAE 10W-40 oils were prepared from the above polymer concentrates, a standard additive package, "Acryloid" (trade mark) 155 pour point depressant (a polymethacrylate) and Exxon base stocks. "Acryloid" (trade mark) 155 pour point depressant was added at 0.5%w. Exxon 100 NLP base oil was used for the SAE 5W-30 oils. Exxon 100 NLP and Exxon 325 N base oils were used for the SAE 10W-40 oils. The SAE 5W-30 oils were blended to about 11 cSt (11 mm²/s) viscosity at 100°C and the cold cranking simulator (CCS) viscosity was measured at -25°C. The SAE 10W-40 oils were blended to about 14 cSt (14 mm²/s) viscosity at 100°C and a cold cranking simulator (CCS) viscosity of 3200 cP (3.2 Pa s) at -20°C.

The engine oil pumpability (TP1) at -25°C using the mini-rotary viscometer (ASTM D4684) and the high temperature high shear rate viscosity at 150°C at 1 x 10⁶ seconds ⁻¹ using the tapered bearing simulator (TBS) (ASTM D4683) were determined for each of the SAE 5W-30 and SAE 10W-40 formulated oils. The results obtained are shown in Tables 1 and 2 following.

**Table 1**

| RHEOLOGY OF SAE 10W-40 OIL FORMULATIONS | | |
|---|---|---|
| Property | Comparison Star Polymer | Star Polymer of the invention |
| Kinematic viscosity at 100°C, cSt (mm²/s) | 14.2 | 14.0 |
| CCS at -20°C, cP (x 10⁻³ Pa s) | 3136 | 3110 |
| TP1 - MRV, cP (x 10⁻³ Pa s) | 16,018 | 15,317 |
| TBS, cP (x 10⁻³ Pa s) | 3.77 | 3.67 |

**Table 2**

| RHEOLOGY OF SAE 5W-30 OIL FORMULATIONS | | |
|---|---|---|
| Property | Comparison Star Polymer | Star Polymer of the invention |
| Kinematic viscosity at 100°C, cSt (mm²/s) | 11.02 | 10.8 |
| CCS at -25°C, cP (x 10⁻³ Pa s) | 2970 | 3056 |
| TP1 - MRV, cP (x 10⁻³ Pa s) | 15,665 | 15,036 |
| TBS, cP (x 10⁻³ Pa s) | 3.11 | 3.03 |

The results in Tables 1 and 2 above demonstrate that the low-temperature properties of the star polymer of the invention are comparable with or better than those of the comparison material.

### Example 5

The star polymer of the invention as described in Example 4 was further compared to several commercial dispersant viscosity-index improvers with respect to low temperature performance. Table 3 shows SAE 5W-30 oil formulations made from the commercial dispersant viscosity-index improvers. The cold cranking simulator (CCS) test results establish that the star polymer dispersant viscosity-index improver of the invention provides lower viscosity at low temperatures.

**Table 3**

| RHEOLOGY OF SAE 5W-30 OIL FORMULATIONS | | |
|---|---|---|
| Dispersant Viscosity-Index Improver | Kinematic viscosity at 100°C, cSt (mm²/s) | CCS at -25°C, cP (x 10⁻³ Pa s) |
| "PARATONE" ∗ 855 (an olefin copolymer) | 11.0 | 4142 |
| "ACRYLOID" ∗ 954 (a polymethacrylate) | 10.8 | 3472 |
| "AMOCO" ∗ 6565 (an olefin copolymer) | 10.7 | 3527 |
| "TLA" ∗ 7200 (a dispersant olefin copolymer) | 10.8 | 3598 |
| Star polymer of the invention | 10.8 | 3056 |
| SAE J300 specifications for 5W-30 oils | 9.3 - 12.5 | 3500 max. |

| | | |
|---|---|---|
| ∗ trade mark | | |

### Example 6

The star polymer of the invention as described in Example 4 was tested for dispersancy in a blotter spot dispersancy test. An oil drain from a test car was used as the test oil for the blotter spot test (the oil was used for 7,500 miles (12,070 km) of city driving). The test oil was doped with the star polymer at 0.5%w, 1.0%w and 2.0%w. The well mixed solutions were then spotted on "Millipore" (trade mark) filter discs of 0.45µ pore size. The star polymer showed improved dispersancy when compared with the spot test for the undoped oil.

## Claims

1. A polymer comprising:
at least 3 first arms, each arm comprising a hydrogenated, polymerised conjugated diene and having a peak molecular weight from 10,000 to 200,000;
at least 3 second arms, each arm comprising a polymerised methacrylate and/or amide or imide derivative thereof and having a peak molecular weight from 500 to 10,000; and
a central core comprising a polymerised bisunsaturated monomer, wherein the central core connects the first and second arms in a star configuration.

2. A polymer according to claim 1, wherein one or more of the first arms further comprise polymerised vinylarene.

3. A polymer according to claim 1 or 2, wherein the conjugated diene is isoprene or 1,3-butadiene.

4. A polymer according to any one of claims 1 to 3, wherein the bisunsaturated monomer is divinylbenzene.

5. A polymer according to any one of claims 1 to 4, wherein the methacrylate has the structure 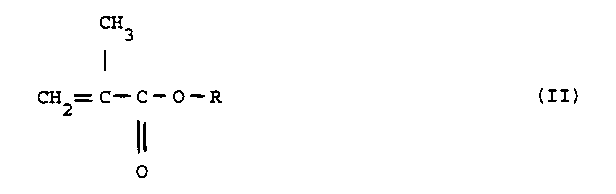 where R is a C₁-C₃₀ alkyl group.

6. A polymer according to any one of claims 1 to 4 comprising:
an average of at least 10 first arms, each arm consisting of hydrogenated isoprene, or styrene and hydrogenated isoprene and having a peak molecular weight from 10,000 to 100,000;
an average of at least 10 second arms, each arm consisting of polymerised t-butyl methacrylate monomers and having a peak molecular weight from 1,000 to 10,000, wherein at least 80% of the polymerised t-butylmethacrylate monomers have been converted to amide or imide groups; and
a central core comprising polymerised divinylbenzene, wherein' the central core connects the first and second arms in a star configuration.

7. A polymer according to claim 6, wherein the average number of first arms is in the range from 10 to 50 and the average number of second arms is in the range from 10 to 50.

8. A process for the preparation of a polymer as defined in claim 1 which comprises the steps of:
(i) anionically polymerising conjugated diene monomers and, optionally, vinylarene monomers to form first arms, each arm having a peak molecular weight from 10,000 to 200,000;
(ii) coupling the first arms with a bisunsaturated compound to form central cores;
(iii) anionically polymerising methacrylate monomers to grow second arms from the central cores thereby to form a base polymer, each second arm having a peak molecular weight from 500 to 10,000;
(iv) hydrogenating the base polymer such that at least 90% of aliphatic unsaturation is hydrogenated; and, if desired,
(v) converting at least a proportion of the polymerised methacrylate monomers to amide or imide groups.

9. A lubricating oil composition comprising a major amount (more than 50%w based on the total composition) of a lubricating oil and a minor amount of a polymer as defined in any one of claims 1 to 7.

10. Use of a polymer as defined in any one of claims 1 to 7 as a viscosity-index improver additive.

## Patentansprüche

1. Ein Polymer, umfassend:
wenigstens drei erste Arme, wobei jeder Arm ein hydriertes, polymerisiertes, konjugiertes Dien umfaßt und ein Spitzenmolekulargewicht von 10.000 bis 200.000 aufweist;
wenigstens drei zweite Arme, wobei jeder Arm ein polymerisiertes Methacrylat und/oder Amid- oder Imidderivat hievon umfaßt und ein Spitzenmolekulargewicht von 500 bis 10.000 aufweist; und
einen zentralen Kern, umfassend ein polymerisiertes zweifach ungesättigtes Monomer, wobei der zentrale Kern die ersten und zweiten Arme in einer Sternkonfiguration verbindet.

2. Polymer nach Anspruch 1, worin ein oder mehrere der ersten Arme zusätzlich polymerisiertes Vinylaren umfassen.

3. Polymer nach Anspruch 1 oder Anspruch 2, worin das konjugierte Dien Isopren oder 1,3-Butadien ist.

4. Polymere nach einem der Ansprüche 1 bis 3, worin das zweifach ungesättigte Monomer Divinylbenzol ist.

5. Polymer nach einem der Ansprüche 1 bis 4, worin das Methacrylat die Struktur 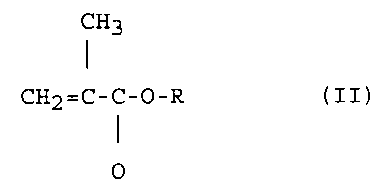 aufweist, worin R eine C₁-C₃₀-Alkylgruppe bedeutet.

6. Polymere nach einem der Ansprüche 1 bis 4, umfassend:
im Durchschnitt wenigstens 10 erste Arme, wobei jeder Arm aus hydriertem Isopren oder aus Styrol und hydriertem Isopren besteht und ein Spitzenmolekulargewicht von 10.000 bis 100.000 aufweist;
im Durchschnitt wenigstens 10 zweite Arme, wobei jeder Arm aus polymerisierten tert.Butylmethacrylatmonomeren besteht und ein Spitzenmolekulargewicht von 1000 bis 10.000 aufweist, wobei wenigstens 80 % der polymerisierten tert.Butylmethacrylatmonomere in Amid- oder Imidgruppen übergeführt worden sind; und
einen zentralen Kern mit einem Gehalt an polymerisiertem Divinylbenzol, wobei der zentrale Kern die ersten und zweiten Arme in einer Sternkonfiguration verbindet.

7. Polymere nach Anspruch 6, worin die Durchschnittszahl der ersten Arme im Bereich von 10 bis 50 liegt und die Durchschnittszahl der zweiten Arme im Bereich von 10 bis 50 liegt.

8. Verfahren zur Herstellung eines Polymers, wie in Anspruch 1 definiert, welches die folgenden Stufen umfaßt:
(i) anionisches Polymerisieren von konjugierten Dienmonomeren und gegebenenfalls Vinylarenmonomeren zur Ausbildung erster Arme, wobei jeder Arm ein Spitzenmolekulargewicht von 10.000 bis 200.000 aufweist;
(ii) Kuppeln der ersten Arme mit einer zweifach ungesättigten Verbindung zur Ausbildung von Zentralkernen;
(iii) anionisches Polymerisieren von Methacrylatmonomeren zum Wachsenlassen zweiter Arme aus den Zentralkernen, unter Ausbildung eines Grundpolymers, wobei jeder zweite Arm ein Spitzenmolekulargewicht von 500 bis 10.000 aufweist;
(iv) Hydrieren des Grundpolymers in solcher Weise, daß wenigstens 90 % der aliphatischen Unsättigung hydriert werden; und gewünschtenfalls
(v) Überführen wenigstens eines Teiles der polymerisierten Methacrylatmonomere in Amid- oder Imidgruppen.

9. Schmierölzusammensetzung, umfassend eine Hauptmenge (mehr als 50 Gew.-%, bezogen auf die Gesamtzusammensetzung) eines Schmieröls und eine kleine Menge eines Polymers, wie in einem der Ansprüche 1 bis 7 definiert.

10. Verwendung eines Polymers, wie in einem der Ansprüche 1 bis 7 definiert, als Viskositätsindexverbesserer-Additiv.

## Revendications

1. Polymère comprenant :
au moins 3 premiers bras, chaque bras comprenant un diène conjugué polymérisé, hydrogéné et possédant un poids moléculaire pic de 10000 à 200000;
au moins 3 seconds bras, chaque bras comprenant un méthacrylate d'alkyle polymérisé et/ou un dérivé du type amide ou imide de celui-ci et possédant un poids moléculaire pic de 500 à 10000; et
un noyau central comprenant un monomère bisinsaturé polymérisé, dans lequel le noyau central raccorde les premiers et seconds bras en une configuration étoilée.

2. Polymère suivant la revendication 1, caractérisé en ce qu'un ou plusieurs des premiers bras comprennent, en outre, du vinylarène polymérisé.

3. Polymère suivant la revendication 1 ou 2, caractérisé en ce que le diène conjugué est l'isoprène ou le 1,3-butadiène.

4. Polymère suivant l'une quelconque des revendications 1 à 3, caractérisé en ce que le monomère bisinsaturé est le divinylbenzène.

5. Polymère suivant l'une quelconque des revendications 1 à 4, caractérisé en ce que le méthacrylate répond à la structure suivante : 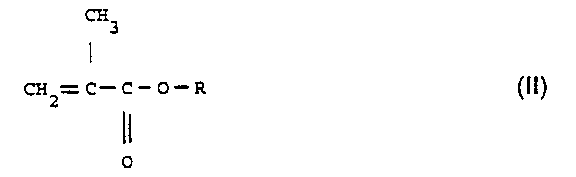 dans laquelle R représente un radical alkyle en C₁ à C₃₀.

6. Polymère suivant l'une quelconque des revendications 1 à 4, comprenant :
une moyenne d'au moins 10 premiers bras, chaque bras étant constitué d'isoprène hydrogéné, ou de styrène et d'isoprène hydrogéné et possédant un poids moléculaire pic de 10000 à 100000;
une moyenne d'au moins 10 seconds bras, chaque bras étant constitué de monomère du type méthacrylate de t-butyle polymérisé et possédant un poids moléculaire pic de 1000 à 10000, où au moins 80% des monomères du type méthacrylate de t-butyle polymérisé ont été convertis en radicaux amide ou imide; et
un noyau central comprenant du divinylbenzène polymérisé, où le noyau central raccorde les premiers et seconds bras en une configuration étoilée.

7. Polymère suivant la revendication 6, caractérisé en ce que le nombre moyen de premiers bras varie de 10 à 50 et le nombre moyen de seconds bras varie de 10 à 50.

8. Procédé de préparation d'un polymère suivant la revendication 1, caractérisé en ce que :
(i) on polymérise anioniquement des monomères du type diène conjugué et, facultativement, des monomères du type vinylarène pour former de premiers bras, chaque bras possédant un poids moléculaire pic de 10000 à 200000;
(ii) on couple les premiers bras à un composé bisinsaturé pour former des noyaux centraux;
(iii) on polymérise anioniquement des monomères du type méthacrylate pour faire croître de seconds bras à partir des noyaux centraux de manière à former un polymère de base, chaque second bras possédant un poids moléculaire pic de 500 à 10000;
(iv) on hydrogène le polymère de base en une manière telle qu'au moins 90% de l'insaturation aliphatique soient hydrogénés; et, si cela se révèle être souhaitable,
(v) on convertit au moins une proportion des monomères de méthacrylate polymérisés en radicaux amide ou imide.

9. Composition d'huile lubrifiante comprenant une proportion majeure (plus de 50% en poids sur base de la composition totale) d'une huile lubrifiante et une proportion mineure d'un polymère tel que défini dans l'une quelconque des revendications 1 à 7.

10. Utilisation d'un polymère tel que défini dans l'une quelconque des revendications 1 à 7, à titre d'additif d'amélioration de l'indice de viscosité.
